# EUROPÄISCHE PATENTSCHRIFT

(11) **EP 2 134 572 B1**
(45) Veröffentlichungstag und Bekanntmachung des Hinweises auf die Patenterteilung: **15.09.2010**
(21) Anmeldenummer: 08734825.6
(22) Anmeldetag: 28.03.2008
(51) Int. Cl.: B60R 16/02, H02G 11/00, E05F 15/14, B60J 5/06

(54) **LEITUNGSFÜHRUNGSEINRICHTUNG**
CABLE ROUTING DEVICE
DISPOSITIF DE GUIDAGE DE CÂBLAGE

(30) Priorität: 12.04.2007 DE 102007017286
(43) Veröffentlichungstag der Anmeldung: 23.12.2009
(73) Patentinhaber: LEONI Bordnetz-Systeme GmbH, 90402 Nürnberg (DE)
(72) Erfinder: PIEH, Mario, 97340 Marktbreit (DE); FRIEDRICH, Norbert, 96181 Rauhenebrach (DE); MEYER, Alexander, 91171 Greding (DE); HEITMEIER, Matthias, 85221 Dachau (DE)
(74) Vertreter: Tergau & Pohl Patentanwälte
(86) Internationale Anmeldenummer: PCT/EP2008/002449
(87) Internationale Veröffentlichungsnummer: WO 2008/125195

(56) Entgegenhaltungen:
- EP-A- 1 108 621
- DE-A1-102005 029 827
- DE-A1-102006 002 909
- US-A1- 2005 062 310
- US-A1- 2006 021 781

## Beschreibung

Die Erfindung betrifft eine Leitungsführungseinrichtung, insbesondere für eine Schiebetüre im Kraftfahrzeugbereich.

Bei einer elektrischen Verbindung zwischen zwei relativ zueinander bewegbaren Bauteilen ist oftmals eine Leitungsführungseinrichtung vorgesehen, in der ein elektrisches Kabel, mit dem die beiden relativ zueinander beweglichen Bauteile verbunden werden, geführt ist.

Im Kraftfahrzeugbau werden Leitungsführungseinrichtungen beispielsweise zur elektrischen Anbindung einer Schiebetüre an das Kraftfahrzeug-Bordnetz eingesetzt. Eine derartige Leitungsführungseinrichtung muss eine dauerhaft sichere und zuverlässige Führung des Kabels gewährleisten. Hierbei ist erforderlich, dass bei den Bewegungen das Kabel definiert geführt wird. Hierzu werden teilweise Rückstellelemente eingesetzt, um das Kabel in einen Ausgangszustand zu bringen.

Eine Leitungsdurchführung mit den Merkmale des Oberbegriffs des Anspruchs 1 ist aus der DE 10 2006 002 909 A1 bekannt.

Aufgrund des insbesondere in der Automobilindustrie hohen Kostendrucks müssen diese Anforderungen möglichst kostengünstig umgesetzt werden.

Der Erfindung liegt die Aufgabe zugrunde, eine derartige Leitungsführungseinrichtung zur Führung eines Kabels zwischen zwei relativ zueinander beweglichen Bauteilen anzugeben, insbesondere zur Anbindung einer Kraftfahrzeug-Schiebetür an ein Kraftfahrzeug-Bordnetz, wobei die Leitungsführungseinrichtung einen einfachen Aufbau zeigt und einen dauerhaft sicheren und zuverlässigen Betrieb gewährleistet.

Die Aufgabe wird erfindungsgemäß gelöst durch eine Leitungsführungseinrichtung mit den Merkmalen des Anspruchs 1. Danach umfasst die Leitungsführungseinrichtung ein Gehäuse mit einer sich in Längsrichtung erstreckenden Verschiebeöffnung, in der ein Verschiebeelement verschieblich gelagert ist. An dem Verschiebeelement ist ein elektrisches Kabel befestigt, welches zur elektrischen Verbindung zwischen den zwei zueinander relativ beweglichen Bauteilen vorgesehen ist. Das Kabel wird innerhalb des Gehäuses in Richtung zu einer Austrittsöffnung geführt. Das Kabel ist entlang eines U-förmig gebogenen Federbands insbesondere ein Federstahlband geführt, welches einerseits am Verschiebeelement und andererseits im Bereich der Austrittsöffnung am Gehäuse befestigt ist. Alternativ zu einem Federstahlband wird ein Band aus Kunststoff mit entsprechenden Federeigenschaften eingesetzt. Aufgrund des Federbandes und dessen Befestigung am Verschiebeelement ist bei einer Relativbewegung zwischen den beiden Bauteilen und einer damit einhergehenden Verschiebung des Verschiebeelements in der Verschiebeöffnung durch das Federband ein definierter Kabelführungsweg gebildet. Das U-förmig gebogene Flachband verändert während der Bewegung seine Geometrie dahingehend, dass die U-Schenkel gegeneinander verschoben werden. Damit ist das am Federband lose anliegende oder auch fixierte Kabel unabhängig von der jeweiligen Stellung definiert geführt. Durch die Verwendung eines Federbandes ist zudem eine sehr einfache und damit kostengünstige Konstruktion erreicht, die einen dauerhaft zuverlässigen Betrieb gewährleistet.

Das Gehäuse ist aus einem Grundteil und einem Deckelteil gebildet, wobei bei abgenommenem Deckelteil das Verschiebeelement sowie das Federband in das Gehäuse eingelegt werden können. Dies ermöglicht eine schnelle und einfache Montage. Insbesondere ist hierbei vorgesehen, dass das Kabel zusammen mit dem Verschiebeelement und dem Federband sowie gegebenenfalls endseitig angeschlagenen Schnittstellen, beispielsweise Steckverbinder, als vorgefertigte Kabelsatzeinheit in das Gehäuse eingelegt wird, welches dann lediglich noch verschlossen werden muss. Der Montageaufwand ist daher insbesondere in diesem Fall sehr gering.

Um die Montage weiter zu vereinfachen, ist am Grundteil eine Montagehilfe vorgesehen, die derart ausgebildet ist, dass bei abgenommenem Deckelteil das Federband in einer definierten Montagestellung zwischen der Montagehilfe und einer Gehäusewand gehalten ist. Bei der Montage wird derart vorgegangen, dass das Federband mit dem daran anliegenden Kabel zwischen die Montagehilfe und der Gehäusewand eingelegt wird, so dass das Federband nicht wieder aus dem Grundteil herausspringen kann. Anschließend wird das Deckelteil auf dem Grundteil befestigt. Bei geschlossenem Gehäuse ist das Federband dann zwischen zwei gegenüberliegenden Gehäusewänden geführt.

Die Montagehilfe ist hierbei als eine am Grundteil angeformte Haltenase ausgeführt, die das Federband in der Montagestellung übergreift. Weiterhin ist die Montagestellung vorzugsweise eine Verschiebe-Endstellung, in der sich das Verschiebeelement in einer der beiden Endpositionen befindet. Dies dient zur Erleichterung der Montage, da die Montageposition für den vorgefertigten Kabelsatz fest definiert ist.

Das Verschiebeelement ist im Hinblick auf eine einfache und zugleich betriebssichere Ausgestaltung als ein Gleitelement ausgebildet, welches nach Art einer Schienenführung in der Gehäusewand geführt ist. Hierbei umgreift das Gleitelement gegenüberliegende Randseiten der Verschiebeöffnung formschlüssig, so dass das Gleitelement senkrecht zur Verschieberichtung allenfalls ein geringes Spiel aufweist.

Um im Betrieb eine Belastung des Kabels möglichst zu vermeiden, ist gemäß einer zweckdienlichen Ausgestaltung das Kabel durch das Verschiebeelement hindurchgeführt. Das Kabel ist also vom Verschiebeelement sicher umschlossen.

Vorzugsweise ist weiterhin vorgesehen, dass das Verschiebeelement aus zwei Teilelementen besteht, nämlich einem Gleitkörper, der innerhalb der Verschiebeöffnung entlang gleiten kann, sowie einem relativ zu diesem drehbeweglich gelagerten Drehkörper. Durch diesen Drehkörper hindurch ist das Kabel zugeführt. Durch die Drehbeweglichkeit des Drehkörpers ist eine sichere Führung des Kabels erzielt und es ist eine Ausgleichs-Drehbewegung ermöglicht.

Um eine definierte und sichere Führung des Federbands zu gewährleisten ist zweckdienlicherweise vorgesehen, dass am Grundteil innenseitig an einer Gehäuseaußenwand ein etwa U-förmig umlaufender Führungssteg vorgesehen ist. D.h. das Federband liegt an diesem umlaufenden Steg an und wird aufgrund seiner Federelastizität definiert gegen diesen Steg gedrückt.

Zweckdienlicherweise dient dieser Führungssteg hierbei zugleich auch als Führung für das Verschiebeelement in der Verschiebeöffnung. Der Führungssteg wird daher vom Verschiebeelement zugleich formschlüssig zur Ausbildung einer Gleitführung hintergriffen. Zweckdienlicherweise ist der Führungssteg hierbei einstückiger und integraler Bestandteil eines spritzgegossenen Grundteils. Korrespondierend hierzu ist zusätzlich oder alternativ auch das Deckelteil mit einem entsprechenden Führungssteg ausgebildet.

In einer bevorzugten Ausgestaltung ist die gesamte Leitungsführungseinrichtung als eine vorgefertigte Montageeinheit ausgebildet, die lediglich noch in den vorgesehenen Einbauraum eingebaut werden muss. Zum Anschluss der elektrischen Versorgung weist die Leitungsführungseinrichtung beidendseitig des Kabels Schnittstellen auf, insbesondere Stecker zur Ausbildung von Steckverbindungen. Die Leitungsführungseinrichtung umfasst hierzu ein erstes Kabelteilstück, das von einer ersten Kabelschnittstelle außerhalb des Gehäuses zum Verschiebeelement geführt wird sowie ein zweites Kabelteilstück, welches innerhalb des Gehäuses vom Verschiebeelement zu einer zweiten Schnittstelle im Bereich der Austrittsöffnung geführt ist. Durch diese Ausgestaltung als vorgefertigte Montageeinheit mit insbesondere als Steckverbinder ausgebildeten Schnittstellen ist eine sehr einfache und schnelle Montage der gesamten Leitungsführungseinrichtung beispielsweise beim Automobilhersteller in einer Produktionsstraße ermöglicht.

Ein Ausführungsbeispiel der Erfindung wird im Folgenden anhand der Zeichnung näher erläutert. Es zeigen jeweils in schematischen Perspektiv-Darstellungen:

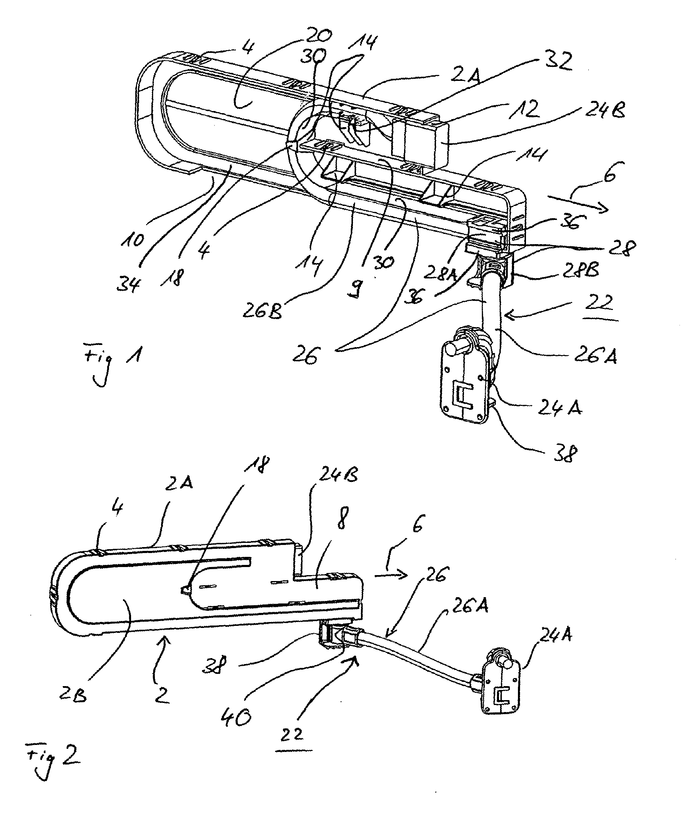

- Fig. 1: eine Leitungsführungseinrichtung mit einem geöffneten Gehäuse und
- Fig. 2: die Leitungsführungseinrichtung gemäß Fig. 1 mit geschlossenem Gehäu- se.

Wie aus den beiden Figuren zu entnehmen ist, umfasst die Leitungsführungseinrichtung ein zweiteilig ausgebildetes Gehäuse 2 mit einem Grundteil 2A und einem Deckelteil 2B. Das Deckelteil 2B ist im Ausführungsbeispiel mit dem Grundteil 2A über Rastverbindungen 4 lösbar befestigt. Das Gehäuse 2 weist eine in etwa quaderförmige Grundgeometrie auf und erstreckt sich in einer Längsrichtung 6. An einer der beiden Seiten in Längsrichtung 6 ist ein Gehäuseschenkel 8 etwas weiter herausgezogen, der ebenso wie der zurückgesetzte Teilbereich in etwa die halbe Gehäusebreite aufweist.

Der zum rückgezogenen Teilbereich ausgebildete Seitenwandabschnitt des Gehäuseschenkels 8 ist teilweise innerhalb des Gehäuses 2 als Trennwand 9 weitergeführt.

Im Gehäuseschenkel 8 ist an dessen der Trennwand 9 gegenüberliegenden Schmalseite eine Verschiebeöffnung 10 ausgebildet, die nahezu die gesamte Höhe der Schmalseite einnimmt. Zum Deckelteil 2B hin ist die Verschiebeöffnung 10 offen ausgebildet, d.h. bei geschlossenem Deckelteil 2B bildet das Deckelteil 2B eine Randseite der Verschiebeöffnung 10. Eine Austrittsöffnung 12 ist an der vorderen Stirnseite des rückgezogenen Teilbereichs ausgebildet. Diese überdeckt im Wesentlichen die gesamte Querschnittsfläche des rückgezogenen Teilbereichs.

Am Grundteil 2A sind mehrere Führungsstege 14 ausgebildet, die etwa einen U-Führungsweg definieren. Die Führungsstege 14 sind hierbei beidseitig zu der Trennwand 9 angeordnet, so dass der Führungsweg U-förmig um ein Ende der Trennwand 9 herumläuft. Die Führungsstege 14 weisen jeweils mit einer Anlagefläche von der Trennwand 9 weg. Anstelle der vereinzelt ausgebildeten Führungsstege 14 kann auch eine durchgehende Führung ausgebildet sein. Das Grundteil 2A ist zusammen mit den Führungsstegen 14 sowie den außenseitig angebrachten Rastelementen 4 vorzugsweise als ein einstückiges Kunststoff-Spritzgussteil ausgebildet.

Am stirnseitigen Ende der Trennwand 9 ist ein speziell ausgebildeter Führungssteg 14 vorgesehen, welcher eine Haltenase 18 aufweist, die parallel zu einer Gehäuserückwand 20 des Grundteils 2A orientiert ist. Hierdurch ist zwischen der Haltenase 18 und der Gehäuserückwand 20 ein in etwa klammerartiger Halteraum gebildet.

In das Grundteil 2A wird bei der Montage ein vorgefertigtes Kabelsatzelement 22 eingelegt. Dieses Kabelsatzelement 22 umfasst eine erste Schnittstelle 24, die im Ausführungsbeispiel einen Befestigungsflansch zum Befestigen des Kabelsatzelementes 22 an einer Kraftfahrzeug-Schiebetür aufweist. Zusätzlich ist an dieser ersten Schnittstelle 24 vorzugsweise ein hier nicht dargestellter Stecker angeschlagen, mit dem ein innerhalb der Schiebetür verlegter Teil-Kabelsatz durch eine einfache Steckverbindung elektrisch mit dem restlichen Kraftfahrzeug-Bordnetz verbunden werden kann. Altemativ hierzu können die einzelnen Leitungen auch direkt bis zu den in der Schiebetür angeordneten Endverbrauchern weitergeführt sein.

An die erste Schnittstelle 24 schließt sich ein erstes Kabelteilstück 26A an, das im Ausführungsbeispiel als ein mehradriges Rundkabel ausgeführt ist. Das erste Kabelteilstück 26A erstreckt sich bis zu einem zweiteilig ausgebildeten Verschiebeelement 28, welches einen Gleitkörper 28A sowie einen relativ zum Gleitkörper drehbeweglich angeordneten Drehkörper 28B aufweist. Das Kabelteilstück 26A ist durch das Verschiebeelement 28 hindurchgeführt und geht in ein zweites Kabelteilstück 26B über, welches innerhalb des Gehäuses 2 zu einer zweiten Schnittstelle, hier als Stecker 24B ausgebildet, geführt ist. Der Stecker 24B ist hierbei in der Austrittsöffnung 12 gehalten.

Das zweite Kabelteilstück 26B ist entlang eines Federbands 30 geführt, welches mit seinem einen Ende im Gleitkörper 28A und mit seinem anderen Ende am Grundteil 2A befestigt ist. Das Federband 30 ist ein einfaches, dünnes Flachblech, das leicht biegbar ist und eine gewisse Federelastizität aufweist. Die Breite des Federbands 30 ist etwas kleiner als die freie Innenhöhe zwischen dem Grundteil 2A und dem Deckelteil 2B. Die Breite des Federbands 30 ist insgesamt derart abgestimmt, dass das Federband zwischen der Gehäuserückwand 20 und dem Deckelteil 2B geführt ist. D.h. das Federband 30 weist lediglich ein ausreichendes Spiel auf, um ein Verklemmen innerhalb des Gehäuses 2 zu vermeiden.

Um eine möglichst gute Führung zu erzielen, ist daher auch vorgesehen, dass die parallel zu der Gehäuserückwand 20 orientierte Haltenase 18 im montierten Zustand in eine entsprechende Aussparung innerhalb des Deckelteils 2B eingreift. D.h. die Haltenase 18 fluchtet im montierten Zustand mit dem Deckelteil 2B und weist zudem eine Materialstärke auf, die in etwa der Dicke des Deckelteils 2B entspricht. Dadurch fluchtet die Haltenase 18 sowohl auf der Innenseite als auch auf der Außenseite mit dem Deckelteil 2B.

Zur gehäuseseitigen Befestigung des Federbands 30 ist der letzte Führungssteg 14 vor der Austrittsöffnung 12 zugleich auch als Haltesteg ausgebildet und weist eine Einstecköffnung 32 auf, in die das Federband 30 von oben, also in Richtung zur Gehäuserückwand 20, eingesteckt werden kann.

Bei der Montage des Kabelsatzelements 22 in das Gehäuse 2 wird das gesamte Kabelsatzelement 22 bei geöffnetem Gehäuse 2 in das Grundteil 2A von oben eingelegt. Hierbei wird das Federband 30 in die Einstecköffnung 32 mit seinem einen Ende eingesteckt. Der Gleitkörper 28A wird in die Verschiebeöffnung 10 eingelegt. Das Federband 30 wird in den klammerartigen Halteraum zwischen der Haltenase 18 und der Gehäuserückwand 20 gebracht. Hierbei befindet sich der Gleitkörper 28A in einer Verschiebeendstellung, liegt also an einem Gehäuserand an. Aufgrund der Haltenase 18 ist das gesamte Kabelsatzelement 22 zunächst fixiert, so dass das Deckelteil 2B problemlos aufgesetzt werden kann. Sobald das Deckelteil 2B befestigt ist, bildet dieses zusammen mit dem Grundteil 2A die Führung für das innenliegende Kabelteilstück 26B, insbesondere für das Federband 30, an dessen Außenkontur entlang das zweite Kabelteilstück 26B geführt ist.

Zur Führung des Gleitkörpers 28A ist am Grundteil 2A als Teil der Gehäuserückwand 20 an deren Randseite zu der umlaufenden Seitenwand ein etwas erhöhter Führungssteg 34 ausgebildet. Dieser Führungssteg 34 wird von zugeordneten Randstegen 36 des Gleitkörpers 28A senkrecht zur Längsrichtung 6 formschlüssig hintergriffen, so dass eine Art Schienenführung ausgebildet ist. Auf Seite des Deckelteils 2B ist gleichermaßen ein entsprechender Führungssteg ausgebildet.

Der Führungssteg 34 erstreckt sich U-förmig umlaufend am Boden des Grundteils 2A. Insgesamt ist hierdurch im zentralen Bereich der Gehäuserückwand 20 eine Vertiefung ausgebildet. Innerhalb dieser Vertiefung wird das Federband 30 geführt. Am inneren Rand des Führungsstegs 34 liegt daher beim Betrieb das Federband 30 an und gleitet entlang am Führungssteg 34. Insgesamt ist hierdurch eine definierte und sichere Führung erzielt. In gleicher Weise ist auch das Deckelteil 2B ausgebildet. Die freie Gehäuseinnenhöhe ist daher gebildet durch die Vertiefungen im Grundteile 2A und korrespondierend hierzu im Deckelteil 2B.

Durch die zweiteilige Ausgestaltung des Verschiebeelements mit dem Drehkörper 28B ist eine drehbewegliche Einführung des Kabels 26 in das Gehäuse 2 gewährleistet. Der Drehkörper 28B ist hierbei im Wesentlichen gebildet durch ein U-förmiges Lagerstück 38, in das ein T-Rohrstück 40 als Kabeleinführungselement drehbeweglich eingesetzt ist. Durch das T-Rohrstück 40 ist das Kabel 26 in das Verschiebeelement 28 eingeführt.

Bei einer Verschiebung des Gleitkörpers 28A in Längsrichtung 6 wird mit dem Gleitkörper 28A das Federband 30 sowie das an diesem entlang geführte Kabelteilstück 26B in den Gehäusefreiraum nach hinten verschoben. Aufgrund der federelastischen Ausgestaltung des Federbands 30 wird dieses nach Außen gegen den Führungssteg 34 gedrückt und von diesem geführt. Durch das Zusammenwirken der Federelastizität mit dem Führungssteg 34 ist ein gleich bleibender Biegeradius erhalten, so dass immer eine definierte U-förmige Führung des zweiten Kabelteilstücks 26B gewährleistet ist.

Die Verschiebung des Gleitkörpers 28A wird beispielsweise durch eine passive Zwangsführung hervorgerufen, wenn sich ein Bauteil, insbesondere die Schiebetüre, an dem die erste Schnittstelle 24A befestigt ist, relativ gegen ein weiteres Bauteil bewegt, insbesondere die Kraftfahrzeugkarosserie. Beim Öffnen und Schließen der Schiebetüre gleitet der Gleitkörper 28A daher zwischen seinen beiden Endstellungen, die insbesondere durch die Ränder der Verschiebeöffnung 10 definiert sind.

### Bezugszeichenliste

- 2: Gehäuse
- 2A: Grundteil
- 2B: Deckelteil
- 4: Rastelement
- 6: Längsrichtung
- 8: Gehäuseschenkel
- 9: Trennwand
- 10: Verschiebeöffnung
- 12: Austrittsöffnung
- 14: Führungssteg
- 18: Haltenase
- 20: Gehäuserückwand
- 22: Kabelsatzelement
- 24A: erste Schnittstelle
- 24B: Stecker
- 26: Kabel
- 26A: erstes Kabelteilstück
- 26B: zweites Kabelteilstück
- 28: Verschiebeelement
- 28A: Gleitkörper
- 28B: Drehkörper
- 30: Federband
- 32: Einstecköffnung
- 34: Führungssteg
- 36: Randsteg
- 38: Lagerstück
- 40: T-Rohrstück

## Patentansprüche

1. Leitungsführungseinrichtung, insbesondere für eine Schiebetüre, für ein elektrisches Kabel (26) zwischen zwei relativ zueinander bewegbaren Bauteilen, umfassend ein Gehäuse (2) mit einer sich in Längsrichtung (6) erstreckenden Verschiebeöffnung (10) und mit einer Austrittsöffnung (12), wobei in der Verschiebeöffnung (10) ein Verschiebelement (28) verschieblich gelagert ist, an dem das Kabel (26) sowie ein U-förmig gebogenes Federband (30) befestigt sind, wobei das Kabel (26) entlang des Federbands (30) zur Austrittsöffnung (12) geführt ist und das Federband (30) mit seinem dem Verschiebelement (28) abgewandten Ende am Gehäuse fixiert ist, **dadurch gekennzeichnet, dass** das Gehäuse (2) ein Grundteil (2A) und ein Deckelteil (2B) umfasst derart, dass bei abgenommenen Deckelteil (2B) das Verschiebelement (28) sowie das Federband (30) in das Gehäuse (2) einlegbar sind, wobei am Grundteil (2A) eine Montagehilfe (18) vorgesehen ist, die derart ausgebildet ist, dass bei abgenommenen Deckelteil (2B) das Federband (30) in einer definierten Montagestellung zwischen der Montagehilfe (18) und einer Gehäusewand (20) gehalten ist und wobei die Montagehilfe (18) eine am Grundteil (2A) angeformte Haltenase (18) ist, die das Federband (30) in der Montagestellung übergreift.

2. Leitungsführungseinrichtung nach Anspruch 1, bei der die Montagestellung eine Verschiebe-Endstellung ist.

3. Leitungsführungseinrichtung nach einem der vorhergehenden Ansprüche, bei der das Verschiebelement (28) als Gleitelement ausgebildet ist und gegenüberliegende Randseiten der Verschiebeöffnung (10) formschlüssig umgreift.

4. Leitungsführungseinrichtung nach einem der vorhergehenden Ansprüche, bei der das Kabel (26) durch das Verschiebelement (28) hindurchgeführt ist.

5. Leitungsführungseinrichtung nach einem der vorhergehenden Ansprüche, bei der das Verschiebeelement (28) einen Gleitkörper (28A) und einen relativ zu diesem drehbeweglich gelagerten Drehkörper (28B) aufweist, durch den das Kabel (26) zugeführt ist.

6. Leitungsführungseinrichtung nach einem der vorhergehenden Ansprüche, bei der am Grundteil (2A) ein Führungssteg (34) als U-förmige Führung für das Federband (30) vorgesehen ist.

7. Leitungsführungseinrichtung nach Anspruch 6 , bei dem der Führungssteg (34) im Bereich der Verschiebeöffnung (10) zugleich als Führung für das Verschiebeelement (28) dient.

8. Leitungsführungseinrichtung nach einem der vorhergehenden Ansprüche, das als vorgefertigte Montageeinheit ausgebildet ist, die eine erste Kabelschnittstelle (24A) aufweist, von der ein erstes Kabelteilstück (26A) zum Verschiebeelement (28) geführt wird, wobei ein zweites Kabelteilstück (26B) innerhalb des Gehäuses (2) am Flachstahlband (30) entlang zu einer zweiten Kabelschnittstelle (24B) geführt ist.

## Claims

1. Cable routing device, in particular for a sliding door, for an electric cable (26) between two modules which can be moved relative to one another, said cable routing device comprising a housing (2) with a slidable opening (10) extending in the longitudinal direction (6) and an outlet (12), whereat a sliding element (28) is mounted slidingly within the slidable opening (10), the cable (26) and a U-shaped spring band (30) being mounted to said sliding element (28), whereat the cable (26) is guided along the spring band (30) towards the outlet (12) and the spring band (30) is affixed to the housing with its end which is facing away from the sliding element (28),
**characterized in that**
the housing (2) comprises a base (2A) and a lid (2B) in such a way, that the sliding element (28) and the spring band (30) can be inserted in the housing (2) when the lid (2B) is removed, whereat an assembly aid (18) is provided for at the base (2A), said assembly aid (18) being formed in such a way that the spring band (30) is held in a defined assembly position between the assembly aid (18) and a housing wall (20) when the lid (2B) is removed, and whereat the assembly aid (18) is a retaining lug (18) being integrally moulded to the base (2A), said retaining lug (18) overlapping the spring band (30) in the assembly position.

2. Cable routing device according to claim 1, with the assembly position being a sliding end-position.

3. Cable routing device according to one of the previous claims, with the sliding element (28) being a gliding element and encompassing the opposite periphery side of the slidable opening (10) in a form-fitting manner.

4. Cable routing device according to one of the previous claims, with the cable (26) being guided through the sliding element (28).

5. Cable routing device according to one of the previous claims, with the sliding element (28) having a sliding body (28A) and a rotary body (28B) which is rotably mounted relative to said sliding body (28A), and the cable (26) is guided through the rotary body (28B).

6. Cable routing device according to one of the previous claims, with a guide arm (34) being provided at the base (2A) as a U-shaped guide for the spring band (30).

7. Cable routing device according to claim 6, with the guide arm (34) also serving as a guide for the sliding element (28) in the area of the slidable opening (10).

8. Cable routing device according to one of the previous claims, which is designed as a pre-assembled assembly unit, comprising a first cable port (24A), from which a first cable section (26A) is guided to the sliding element (28), whereat a second cable section (26B) is guided within the housing (2) along the spring band (30) to a second cable port (24B).

## Revendications

1. Dispositif de guidage de câble ou de conduite, notamment pour une portière coulissante, destiné à un câble électrique (26) entre deux modules de construction relativement mobiles l'un par rapport à l'autre, le dispositif comprenant un carter (2) qui présente une ouverture de coulissement (10) s'étendant dans la direction longitudinale (6) et une ouverture de sortie (12), un élément coulissant (28), auquel sont fixés le câble (26) et une bande élastique de ressort (30) pliée en forme de U, étant monté coulissant dans l'ouverture de coulissement (10), le câble (26) étant mené et guidé le long de la bande élastique de ressort (30) jusqu'à l'ouverture de sortie (12), et la bande élastique de ressort (30) étant fixée au carter par son extrémité opposée à celle où se trouve l'élément coulissant (28), **caractérisé en ce que** le carter (2) comprend une partie de base (2A) et une partie de couvercle (2B) conçues de manière telle que lorsque la partie de couvercle (2B) est déposée, l'élément coulissant (28) ainsi que la bande élastique de ressort (30) puissent être insérés dans le carter (2), **en ce que** sur la partie de base (2A) est prévu un élément d'aide au montage (18), qui est d'une conception telle que lorsque la partie de couvercle (2B) est déposée, la bande élastique de ressort (30) soit maintenue dans une position de montage définie, entre l'élément d'aide au montage (18) et une paroi de carter (20), et **en ce que** l'élément d'aide au montage (18) est un talon de retenue (18) formé sur la partie de base (2A) et surmontant la bande élastique de ressort (30) dans la position de montage.

2. Dispositif de guidage de câble selon la revendication 1, dans lequel la position de montage est une position extrême de coulissement.

3. Dispositif de guidage de câble selon l'une des revendications précédentes, dans lequel l'élément coulissant (28) est réalisé sous forme d'élément glissant et enserre, par complémentarité de formes, des côtés de bordure mutuellement opposés de l'ouverture de coulissement (10).

4. Dispositif de guidage de câble selon l'une des revendications précédentes, dans lequel le câble (26) est mené à travers ou traverse l'élément coulissant (28) .

5. Dispositif de guidage de câble selon l'une des revendications précédentes, dans lequel l'élément coulissant (28) présente un corps glissant (28A) et un corps tournant (28B) qui est monté mobile en rotation par rapport à ce corps glissant, et à travers lequel est amené le câble (26).

6. Dispositif de guidage de câble selon l'une des revendications précédentes, dans lequel sur la partie de base (2A) est prévue une nervure de guidage (34) en tant que guide en forme de U pour la bande élastique de ressort (30).

7. Dispositif de guidage de câble selon la revendication 6, dans lequel la nervure de guidage (34), dans la zone de l'ouverture de coulissement (10), sert en même temps de guide pour l'élément coulissant (28).

8. Dispositif de guidage de câble selon l'une des revendications précédentes, qui est réalisé sous la forme d'une unité de montage préfabriquée, qui présente une première interface ou zone de jonction de câble (24A), à partir de laquelle un premier tronçon de câble (26A) est mené jusqu'à l'élément coulissant (28), une deuxième portion de câble (26B) menant, à l'intérieur du carter (2) le long de la bande de feuillard d'acier (30), jusqu'à une deuxième zone d'interface ou de jonction de câble (24B).
